# NEUE EUROPÄISCHE PATENTSCHRIFT

(11) **EP 1 637 234 B2**
(45) Veröffentlichungstag und Bekanntmachung des Hinweises auf die Entscheidung über den Einspruch: **13.06.2012**
(45) Hinweis auf die Patenterteilung: 21.01.2009
(21) Anmeldenummer: 04021266.4
(22) Anmeldetag: 08.09.2004
(51) Int. Cl.: B05C 17/00, B29C 47/10

(54) **Handextruderschweissgerät**
Handheld extrusion welding device
Dispositif de soudage par extrusion portable

(43) Veröffentlichungstag der Anmeldung: 22.03.2006
(73) Patentinhaber: Leister Technologies AG, 6056 Kägiswil (CH)
(72) Erfinder: Di Miceli, Guiseppe, 5737 Menziken (CH); Niederberger, Adolf, 6056 Kägiswil (CH); Arnold, Hans, 6056 Kägiswil (CH)
(74) Vertreter: Klocke, Peter

(56) Entgegenhaltungen:
- EP-A2- 1 577 079
- DE-A1- 2 042 973
- DE-A1- 2 823 171
- DE-A1- 2 910 845
- DE-B4- 19 727 016
- DE-B4- 19 952 166
- DE-C1- 4 119 137
- US- - 4 828 020
- 'Artikel 3750, Vol. 24, Ausgabe 2 aus 03/2003 von "The Plastics' Bd. 24, März 2003,

## Beschreibung

Die vorliegende Erfindung betrifft ein Handextruderschweißgerät zum Verschweißen von thermoplastischen Kunststoffmaterialien mit einer Extruderschnecke, einer Antriebseinrichtung für die Extruderschnecke in axialer Verlängerung zu der Extruderschnecke und einer Heißlufteinrichtung zur Erzeugung von Vorwärmluft.

Derartige Handextruderschweißgeräte sind bekannt und werden insbesondere zum Verschweißen von Kunststoffplatten oder dergleichen verwendet. Die bekannten Kunststoffsschweißgeräte bestehen im Wesentlichen aus einer Handbohrmaschine, die als Antrieb dient, und einem darauf abnehmbar aufgesetzten Vorsatzgerät. In dem Vorsatzgerät wird ein über einen oder mehrere Förderkanäle und eine Fördereinrichtung zugeführter Kunststoffstrang in Form eines Kunststoffdrahtes zunächst zerstückelt und dann in einer meist als Transportschnecke ausgebildeten Transporteinrichtung und einer Plastifiziereinrichtung derart erwärmt, dass das zerstückelte Kunststoffmaterial einen plastischen Zustand einnimmt und über einen Schweißschuh als Schweißmaterial ausgestoßen wird. Die Heißlufteinrichtung umfasst eine Lufterzeugungseinrichtung in Form eines internen (oder einen Anschluss für eine Schlauchleitung zu einem externen Gebläse) und eine Heizeinrichtung. Beispielhaft wird hier die DE-A-28 23 171 und DE-C1-4119137 genannt, wobei DE-C1-4119137 ein Handextruderschweißgerät gemäß dem Oberbegriff des Anspruchs 1 offenbart.

Alle diese Handextruderschweißgeräte können zwar durch die Verwendung einer Handbohrmaschine kostengünstig realisiert werden, sind aber auf Grund ihres Aufbaues für einen robusten und langlebigen Einsatz nicht verwendbar.

Der vorliegenden Erfindung liegt daher die Aufgabe zu Grunde, ein neues Handextruderschweißgerät vorzuschlagen, das als Kompaktgerät ausgebildet ist in dem der Antrieb und zumindest teilweise die Heizeinrichtung, eine Steuer- und Regeleinrichtung einschließlich Anzeige und Bedienung, Handhabungselemente integrierbar sind und die thermische Beanspruchung der einzelnen Einheiten optimiert ist.

Diese Aufgabe wird erfindungsgemäß durch ein Handextruderschweißgerät mit den Merkmalen des Hauptanspruchs gelöst. Weitere vorteilhafte Ausgestaltungen sind den Unteransprüchen zu entnehmen.

Gemäß der Erfindung weist das Handextruderschweißgerät ein mehrteiliges Gehäuse auf, das schneckenseitig einen Kühlkörper mit Lufteinlässen aufweist, der als zentrales tragendes Basisteil ausgebildet ist, um die Gehäusewände, die Antriebseinrichtung, den Schneckenzylinder und die Heißlufteinrichtung mechanisch aufzunehmen. Der Kühlkörper stellt durch seine Anordnung im Handextruderschweißgerät ein zentrales Basisteil dar, das die übrigen Gehäuseteile abstützt und auch die durch die Extruderschnecke aufgebrachten Torsionskräfte aufnimmt. Hierzu ist der Kühlkörper entsprechend stabil, üblicherweise aus Metall, vorzugsweise aus Aluminium, ausgebildet, und derart mit dem Gehäuse, Getriebe und Schneckenzylinder verbunden, dass er in der Lage ist, die axialen und radialen Kräfte zwischen der Antriebseinrichtung und dem Schneckenzylinder zu übertragen. Die Anordnung des Kühlkörpers an der der Extruderschnecke zugewandten Seite des Gehäuses hat den Vorteil, dass damit eine zu starke Erwärmung des einzuführenden Kunststoffschweißdrahtes in das Gehäuse verhindert wird und eine Kühlung des Getriebes durch konstruktiv und fertigungstechnisch einfache Maßnahmen möglich ist. Mit der Anordnung des Kühlkörpers an einer getriebenahen Stelle kann über die Lufteinlässe eine direkte Kühlung des stark beanspruchten Getriebes erreicht werden. Zusätzlich wird im Anschluss daran auch der Motor gekühlt. Durch die Integration zumindest teilweise der Heißlufteinrichtung, nämlich zumindest des Gebläses der Heißlufteinrichtung, und der Antriebseinrichtung aus Motor und Getriebe in einem Gehäuse können die wesentlichen Teile kompakt zusammengefasst werden und machen dadurch das Gerät handlicher und vielseitig hinsichtlich der anbringbaren Zubehörteile. Grundsätzlich ist es auch möglich an Stelle eines Gebläses in dem Gehäuse nur einen Anschluss für ein externes Gebläse vorzusehen, so dass die Luft beispielsweise über eine Schlauchleitung herangeführt werden kann.

Gemäß einer bevorzugten Ausbildung der Erfindung ist der Kühlkörper zumindest zweiteilig ausgebildet ist und die Teile des Kühlkörpers miteinander verspannt sind. Dies hat den Vorteil, dass durch die Verspannung gleichzeitig die Extruderschnecke in einem Getriebeflansch fixiert werden kann und auch damit die Verbindung des Gehäuses mit dem Getriebe erhöht werden kann. Bei einer zweiteiligen längsverlaufenden Trennung des Kühlkörpers in zwei Kühlkörperhälften können die Teile spiegelsymmetrisch ausgebildet werden.

Als besonders vorteilhaft ist gemäß einer weiteren Ausbildung der Erfindung das Getriebe zumindest teilweise von dem Kühlkörper umgeben und kontaktiert diesen zumindest teilweise thermisch. Damit erfolgt einerseits eine direkte Kühlung des Getriebes durch den Kontakt und eine Kühlung durch Konvektion aufgrund der über die Lufteinlässe einströmenden Kaltluft.

Des Weiteren ist einer weiteren Ausbildung in dem Kühlkörper mindestens ein Einzugskanal für den Schweißdraht angeordnet, der im Einzugsbereich der Extruderschnecke endet. Damit übernimmt dieser eine weitere Kühlfunktion für den Schweißdraht aus Kunststoff und sorgt dafür, dass der Schweißdraht beim Einführen nicht so weit erhitzt wird, dass das Schmelzen bereits in dem Schweißdrahtkanal einsetzt. Vorzugsweise ist auch die Einzugsöffnung zu dem Einzugskanal an dem Kühlkörper angeordnet. Dies bedeutet eine einfachere Führung und weniger Aufwand bei der Herstellung des Handextruderschweißgeräts.

Damit der Schweißdraht sich möglichst wenig verdrillt, mündet der Einzugskanal in einer die Extruderschnecke umgebenden Drahteinzugshülse mit mindestens einer schräg verlaufenden Führungsrille, die mindestens eine in Längsrichtung verlaufende spitze Erhebung aufweist.

Durch die Erfindung wird ein Handextruderschweißgerät bereit gestellt, das im Hinblick auf die Leistung und Lebensdauer des Geräts eine optimierte Kühlung einerseits und Erwärmung der gewünschten Bereiche bereit stellt. Durch den gesamten Aufbau entsteht ein kompaktes und vom Bediener gut handhabbares Handextruderschweißgerät. Die Anordnung des Kühlkörpers als Basisteil erlaubt zusätzlich die Anbringung von Handhabungselementen, wie z. B. Handgriffe, Gummipuffer, usw.

Nachfolgend wird die Erfindung anhand eines Ausführungsbeispiels in Verbindung mit den begleitenden Zeichnungen erläutert. Es stellen dar:
- Figur 1: die perspektivische Ansicht des Handextruderschweißgeräts von vorne;
- Figur 2: die perspektivische Ansicht des Handextruderschweißgeräts von der gegenüberliegenden Seite gemäß Figur 1 von hinten;
- Figur 3: einen Längsteilschnitt mit der in dem Gehäuse integrierten Antriebseinrichtung und Heißlufteinrichtung mit Gebläse;
- Figur 4: eine Draufsicht auf die Vorderseite des Kühlkörpers;
- Figur 5: die perspektivische Ansicht der Vorderseite des Kühlkörpers;
- Figur 6: die perspektivische Ansicht der Rückseite des Kühlkörpers;
- Figur 7: einen Längsschnitt durch den Kühlkörper;
- Figur 8: eine Draufsicht auf das Handextruderschweißgerät mit Schnitt durch den Kühlkörper; und
- Figur 9: die perspektivische Frontansicht einer Einzugshülse.

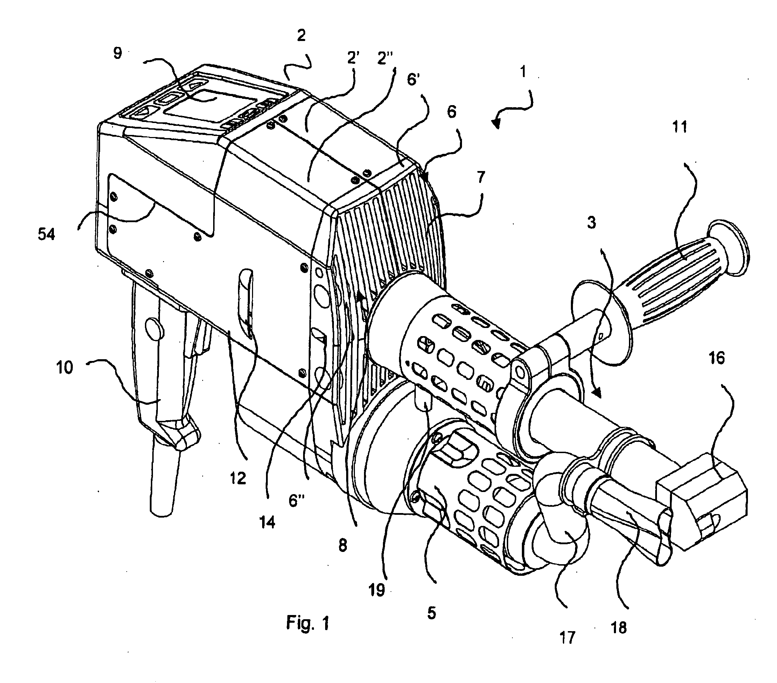

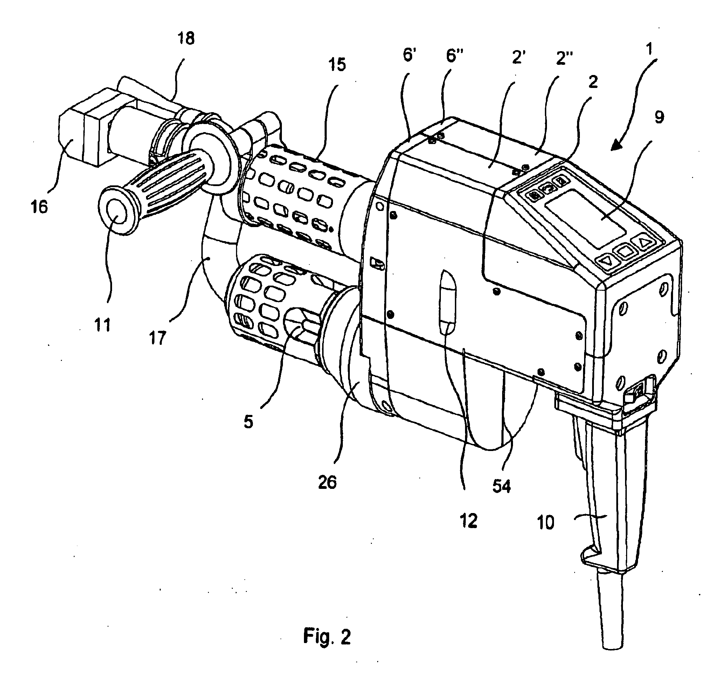

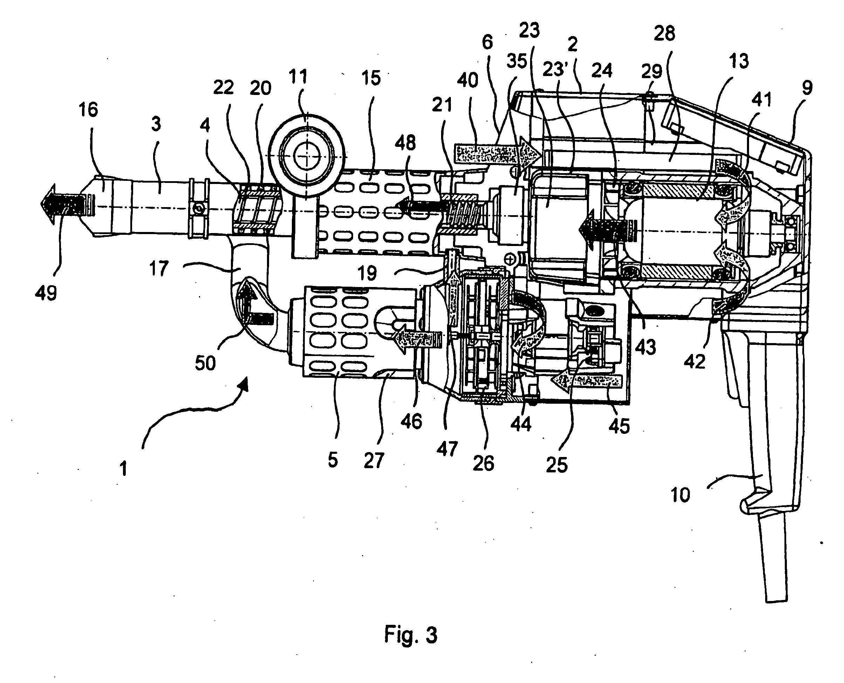

Die Figuren 1 und 2 zeigen das Handextruderschweißgerät 1 aus verschiedenen Ansichten mit einem Gehäuse 2, aus dem an der Stirnseite das eine Extruderschnecke 4 (Figur 3) umgebende Schneckengehäuse 3 und das Heizgehäuse 5 herausragt. Das Gehäuse 2 weist auf der der Extruderschnecke 4 und dem Heizgehäuse 5 zugewandten Seite einen zweiteiligen Kühlkörper 6 mit Kühlrippen 7 und Lufteinlässen 8 auf. Das Gehäuse 2 ist entsprechend, wie an den Nähten 54 erkennbar, durch zwei Gehäusehälften 2' und 2" geschlossen, die sich an dem Kühlkörper 6 als Basisteil abstützen. An dem Gehäuse befindet sich des Weiteren eine elektronische Anzeige 9 sowie ein Handgriff 10. Ein weiterer Handgriff 11 für die andere Hand der Bedienperson ist an dem Schneckenzylinder 3 befestigt. Seitlich befindet sich an den Gehäusehälften 2', 2" jeweils eine Öffnung 12 für den Austritt der Warmluft von dem im inneren angeordneten Antriebsmotor 13 (Figur 3) für die Extruderschnecke 4. An den Seiten des Kühlkörpers 6 befindet sich jeweils eine Öffnung 14 für den Einzug eines Schweißdrahts. Sowohl der Schneckenzylinder 3 als auch das Heizgehäuse 5 sind in einem ersten Abschnitt nach dem Gehäuse 2 mit einem gelöcherten Gehäusemantel 15 umgeben. Am Ende des Schneckenzylinders 3 ist ein Schweißschuh 16 angeordnet, der entsprechend den Bedürfnissen ausgetauscht und angepasst werden kann. Das Heizgehäuse 5 mündet in eine Warmluftleitung 17, die gekrümmt ist und in eine Schweißnahtvorwärmdüse 18 mündet, die in der Nähe des Schweißschuhs 16 angeordnet ist. Aus der Figur 1 ist noch eine Kaltluftabzweigung 19 ersichtlich, die Kaltluft dem zugeführten Schweißdrahteinzugssystem zuführt.

Figur 3 zeigt den inneren Aufbau des Handextruderschweißgeräts 1 im Detail mit der durch Pfeile angedeuteten Luftführung. Die Extruderschnecke 4 in dem Schneckengehäuse 3 ist mit einer Rohrwendelheizpatrone 20 entlang des Schaftes umgeben. Auf der dem Gehäuse 2 zugewandten Seite der Extruderschnecke 4 weist diese in bekannter Art und Weise ein Schneckengewinde 21 für den Einzug des Schweißdrahtes auf, das eine andere Steigung aufweist als das Schneckengewinde 22 in dem für die Plastifizierung vorgesehenen Bereich. In axialer Richtung zu der Extruderschnecke 4 ist in dem Gehäuse 2 ein Getriebe 23 angeordnet, das mit dem dahinter angeordneten Antriebsmotor 13 verbunden ist. An dem Antriebsmotor 13 befindet sich auf der Getriebeseite ein Lüfterrad 24.

Unterhalb des Getriebes 23 befindet sich in dem Gehäuse 2 ein Gebläsemotor 25, der ein zweistufiges Gebläse 26 antreibt, das die Luft durch eine im Anschluss daran angeordnete Heizeinrichtung mit einem elektrischen Heizelement in die Warmluftleitung 17 bläst. Das Heizelement kann beispielsweise als übliches Heizelement mit Heizwendeln ausgebildet und in dem Luftstrom angeordnet sein. Im Bereich der elektronischen Anzeige 9 und oberhalb des Motors 13 und des Getriebes 23 befinden sich die elektrische Steuereinrichtung 28 für das Handextruderschweißgerät, dargestellt als Leiterplatte mit elektronischen Bauteilen.

Die Kaltluft für den Antriebsmotor 13 wird zwischen den Kühlrippen 7 durch Lufteinlässe 8, wie mit dem Pfeil 40 gekennzeichnet, angesaugt und gelangt über den Kanal 29 oberhalb der Steuereinrichtung 28 zu der hinteren Stirnseite des Antriebsmotors 13 (Pfeil 41). Gleichzeitig wird noch Kaltluft durch das Gehäuse aus dem Bereich des Kühlkörpers 6 (Pfeil 42) dem Antriebsmotor 13 zugeführt. Die Warmluft 43 des Antriebsmotors 13 kann dann seitlich aus den Öffnungen 12 am Gehäuse 2 austreten.

Für das zweistufige Gebläse 26 gelangt ebenfalls durch entsprechende Lufteinlässe 8 zwischen den Kühlrippen 7 Luft (Pfeil 44) in das Gehäuse 2. Mit dem Pfeil 45 ist die über den Innenraum des Gehäuses 2 zu dem zweistufigen Gebläse gelangende bereits vom Gebläsemotor 25 erwärmte Luft bezeichnet. Die druckseitig aus dem Gebläse 26 austretende Luft 46 wird der Heizeinrichtung 27 zugeführt. Ein Teil 47 davon wird über die Kaltluftabzweigung 19 in den Bereich des Einzugskanals und das Schneckengewinde 21 geführt, um eine unerwünschte Erwärmung des Schweißdrahtes zu verhindern. Mit dem Pfeil 50 ist in der Figur die aus der Heizeinrichtung 27 durch die Warmluftleitung 17 bewegte Warmluft bezeichnet. Über die Öffnungen des die Extruderschnecke umgebenden Lochgehäuses 15 kann Warmluft 48 aus dem Einzugsbereich abgeführt werden. Mit dem Pfeil 49 ist die Vorwärmluft für die Schweißnaht bezeichnet, die aus der Vorwärmdüse 18 am Ende der Warmluftleitung 17 austritt.

Figur 3 zeigt auch das Getriebe 23 mit einem glockenförmigen Getriebegehäuse 23' mit einem in dem Kühlkörper 6 angeordneten Getriebeabgang 35, der auf den nicht sichtbaren Schaft der Extruderschnecke 4 presst und diese hält. Der Kühlkörper 6 ist direkt mit dem Getriebegehäuse 23' verbunden und gibt damit auch dem dahinter angeordneten Antriebsmotor 13, der zusätzlich auf der gegenüberliegenden Seite des Gehäuses gelagert ist, Stabilität. An dem Kühlkörper 6 ist außerdem der Extrudermantel 3 sowie die Gehäusehälften 2', 2" befestigt. Darüber hinaus umschließt der Kühlkörper 6 an seinem unteren Ende zumindest teilweise noch das Gebläse 26, das ebenfalls mit dem Kühlkörper 6 verbunden ist. Damit wirkt der Kühlkörper 6 als ein zentrales Basisteil, das den gesamten Aufbau des Handextruderschweißgeräts maßgeblich beeinflusst. Zum einen dient es als tragendes Element für die Gehäusehälften 2', 2" und die Antriebseinrichtung bestehend aus Getriebe 23 und Antriebsmotor 13. Zum anderen stützt es den Schneckenzylinder 3 und das Gebläse 26 und übernimmt dadurch die axialen und radialen Kräfte, die durch die sich drehende Extruderschnecke 4 und dem Material zwischen der Extruderschnecke 4 und dem Schneckenzylinder 3 entstehen.

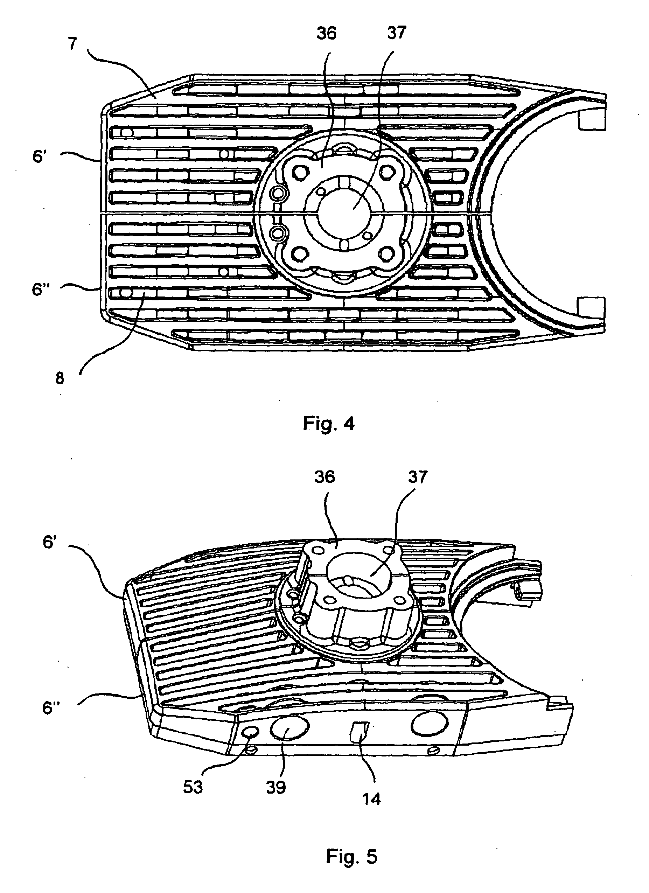

Die Figuren 4 bis 6 zeigen den Kühlkörper 6 in verschiedenen Ansichten. In der Draufsicht in Figur 4 sind die Kühlrippen 7 mit den Lufteinlässen 8 deutlich erkennbar. Der Kühlkörper 6 ist zweiteilig aufgebaut und weist zwei spiegelsymmetrische Kühlkörperhälften 6' und 6" auf. Zentral in dem Kühlkörper 6 ist ein aus der Oberfläche des Kühlkörpers 6 herausragender Kühlkörperstutzen 36 angeordnet, der der Abstützung und Befestigung des Schneckenzylinder 3 dient. Die zentrale Bohrung 37 dient der Aufnahme der Einzugshülse 32, in die dann wiederum die Extruderschnecke 4 einsteckbar ist.

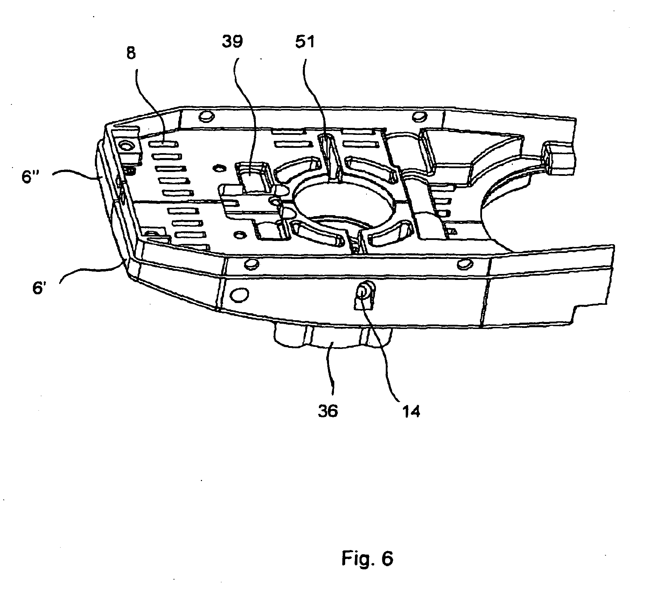

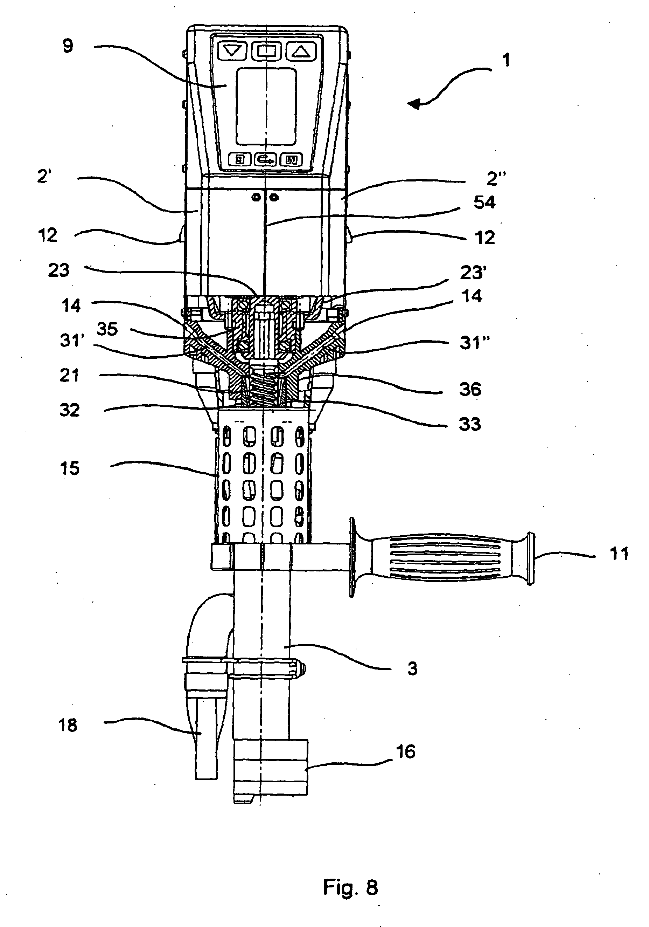

Aus den Figuren 5 und 6 sind die seitlichen Öffnungen 14 für den Schweißdraht ersichtlich, die in dem Ausführungsbeispiel unterschiedliche Durchmesser aufweisen, um verschiedene Schweißdrahtmaterialien verarbeiten zu können. Der Verlauf der Einzugskanäle ist in der Figur 8 dargestellt. Figur 5 zeigt noch die Austrittsöffnung 38 des in der Kühlkörperhälfte 6" verlaufenden Einzugskanals in der Bohrung 37 des Kühlkörperstutzens 36, die in die in dieser Figur nicht dargestellten Einzugshülse 33 mündet.

An der Längsseite des Kühlkörpers 6 sind in der Figur 5 zwei Bohrungen 39 ersichtlich, die der Aufnahme von Schrauben dienen, um die beiden Kühlkörperhälften 6' und 6" miteinander zu verspannen. Die Verspannung bewirkt einerseits die Ausbildung des Kühlkörpers 6 zu einem stabilen Basisteil des Handextruderschweißgeräts und andererseits, wie bereits erwähnt, das Zusammenpressen des Getriebegehäuses 23, so dass in diesem Bereich sowohl ein mechanischer als auch thermischer Kontakt entsteht. Die Bohrungen 53 sind beispielsweise zum Anbringen von Haltegriffen oder Gummipuffern.

In der Figur 6 sind die Lufteinlässe 8 sowie die Bohrungen 39 für die Schrauben ersichtlich. Die Querschlitze 51 sind für den Eingriff von Stiften zum Zwecke der Verdrehsicherung.

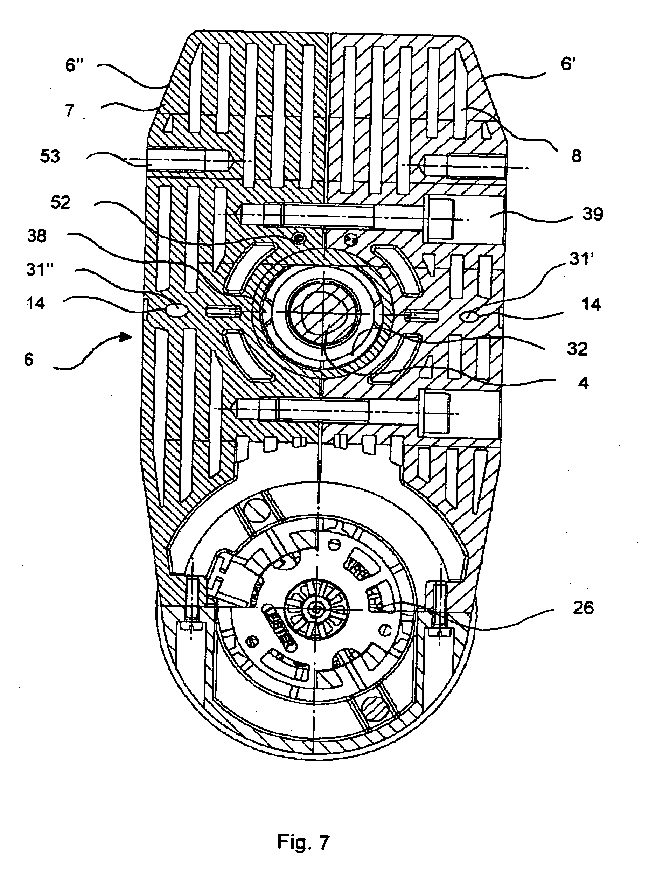

Der Längsschnitt durch den Kühlkörper 6 mit den Kühlkörperhälften 6' und 6" in Figur 7 zeigt die Anordnung der Kühlrippen 7, der Lufteinlässe 8, der Extruderschnecke 4 in der Einzugshülse 32, die Einzugskanäle 31' und 31" mit den Öffnungen 14 sowie im unteren Bereich die Anordnung des Gebläses 26 an den Kühlkörper 6. In dem Kühlkörper 6 sind auch Durchführungen 52 für elektrische Leitungen angeordnet.

Aus der Draufsicht in Figur 8 ist der Verlauf der unterschiedlichen Einzugskanäle 31' und 31" zu der Einzugshülse 32 ersichtlich. Diese weist eine schräg verlaufende Führungsrille auf, in der der Schweißdraht dem Einzugsschneckengewinde 21 zugeführt wird. Die Figur zeigt außerdem einen Teil des glockenförmigen Getriebegehäuses 23, das in dem Bereich des Getriebeabgangs 35 von den Kühlkörperhälften 6' und 6" gespannt und mittels nicht dargestellten Stiften gegen Verdrehen gesichert wird.

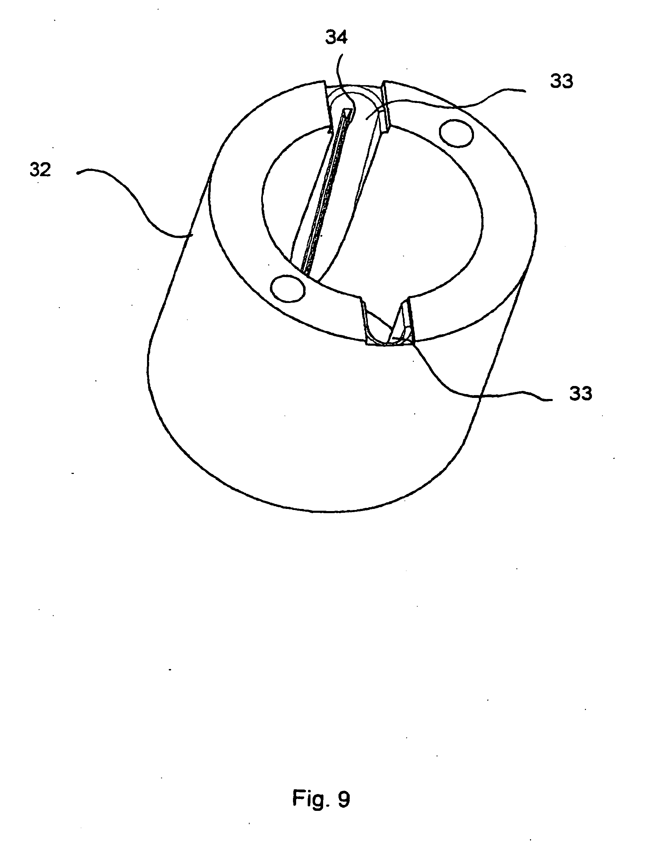

Aus der perspektivischen Frontansicht der Einzugshülse 32 in Figur 9 ist erkennbar, dass die Führungsrille 33 schräg verläuft und im Nutboden eine in Längsrichtung verlaufende Erhebung 34 aufweist. Die Erhebung 34 ist an ihrem dem eingeführten Schweißdraht zugewandten Ende spitz zulaufend und wirkt dort wie ein Messer. Dies hat zur Folge, dass beim Einführen des Schweißdrahtes dieser durch die Drehbewegung der Extruderschnecke 4 nicht oder nur minimal mit bewegt wird, so dass der üblicherweise von einer Rolle abgewickelte Schweißdraht nahezu geradlinig in die Schweißdrahtöffnung 14 einläuft. Das übliche Verdrillen und Bilden von Schlaufen fällt damit weg und wird durch die besondere Ausgestaltung und Führung des Schweißdrahtes in dem Kühlkörper 6 und anschließend in der Einzugshülse 32 bewirkt. Die Einzugshülse 32 kann je nach Herstellung der Führungsrille 33 ein- oder zweiteilig ausgebildet sein.

Mit dem Handextruderschweißgerät gemäß der Erfindung wird ein kompaktes und robustes sowie hinsichtlich der Kühlung optimiertes Handextruderschweißgerät bereitgestellt, das darüber hinaus durch die besondere Anordnung des Kühlkörpers einen einfachen und kostengünstigen aber besonders stabilen Aufbau ermöglicht.

## Patentansprüche

1. Handextruderschweißgerät (1) zum Verschweißen von thermoplastischen Kunststoffmaterialien mit einer Extruderschnecke (4) mit Schneckenzylinder (3), einer Antriebseinrichtung (13, 23) für die Extruderschnecke (4) in einem mehrteiligen Gehäuse in axialer Verlängerung zu der Extruderschnecke (4) und eine Heißlufteinrichtung (27) zur Erzeugung von Vorwärmluft, **dadurch gekennzeichnet dass** das ein mehrteiliges Gehäuse (2), das schneckenseitig einen Kühlkörper (6) mit Lufteinlässen (8) aufweist, der als zentrales tragendes Basisteil ausgebildet ist, um die Gehäusewände (2', 2"), die Antriebseinrichtung (13, 23), den Schneckenzylinder (3) und die Heißlufteinrichtung (25, 26, 27) mechanisch aufzunehmen.

2. Handextruderschweißgerät nach Anspruch 1, **dadurch gekennzeichnet, dass** der Kühlkörper (6) zumindest zweiteilig ausgebildet ist und die Teile des Kühlkörpers (6) miteinander verspannt sind.

3. Handextruderschweißgerät nach Anspruch 2, **dadurch gekennzeichnet, dass** das Getriebe (23) der Antriebseinrichtung zumindest teilweise von dem Kühlkörper (6) umgeben ist und ihn zumindest teilweise thermisch kontaktiert.

4. Handextruderschweißgerät nach einem der vorangegangenen Ansprüche, **dadurch gekennzeichnet, dass** in dem Kühlkörper (6) mindestens ein Einzugskanal (31) für den Schweißdraht angeordnet ist und im Einzugsbereich (21) der Extruderschnecke (4) endet.

5. Handextruderschweißgerät nach Anspruch 4, **dadurch gekennzeichnet, dass** die Einzugsöffnung (14) zu dem Einzugskanal (31) an dem Kühlkörper (6) angeordnet ist.

6. Handextruderschweißgerät nach Anspruch 4 oder 5, **dadurch gekennzeichnet, dass** der Einzugskanal (31) in einer die Extruderschnecke (4) umgebenden Drahteinzugshülse (32) mit mindestens einer schräg verlaufenden Führungsrille (33), die mindestens eine in Längsrichtung verlaufende spitze Erhebung (34) aufweist, mündet.

7. Handextruderschweißgerät nach einem der vorangegangenen Ansprüche, **dadurch gekennzeichnet, dass** an den Kühlkörper (6) Montage- und Tragelemente anbringbar sind.

## Claims

1. A handheld extruder welding device (1) for welding thermoplastic synthetic materials, comprising an extruder screw (4) with a screw cylinder (3), a drive system (13, 23) for the extruder screw (4) arranged in a multipart housing in an axial extension of the extruder screw (4), and a hot air unit (27) for producing hot air for pre-heating, **characterized in that** the housing (2) comprises a cooling body (6) with air inlets (8) on the screw side, which is engineered as a central support base component that holds the housing walls (2', 2"), the drive system (13, 23), the screw cylinder (3) and the hot air unit (25, 26, 27).

2. A handheld extruder welding device according to Claim 1, **characterized** wherein the cooling body (6) includes at least two parts, and that the parts of the cooling body (6) are locked together.

3. A handheld extruder welding device according to Claim 2, **characterized** wherein the gear unit (23) of the drive system is surrounded, at least in part, by the cooling body (6), and is, at least in part, in thermal contact with it.

4. A handheld extruder welding device according to one of the above mentioned Claims, **characterized in that** the cooling body (6) contains at least one feed channel (31) for the welding wire that ends in the feed zone (21) of the extruder screw (4).

5. A handheld extruder welding device according to Claim 4, **characterized in that** the feed opening (14) for the feed channel (31) is located on the cooling body (6).

6. A handheld extruder welding device according to Claim 4 or 5, **characterized in that** the feed channel (31) ends in a wire feed sleeve (32) surrounding the extruder screw (4), and the feed sleeve has a least one slanted guide groove (33) that has at least one pointed ridge (34) running in longitudinal direction.

7. A handheld extruder welding device according to one of the above mentioned Claims, **characterized in that** assembly and carrying elements can be attached to the cooling body (6).

## Revendications

1. Appareil portable (1) de soudage par extrusion pour le soudage de matériaux thermoplastiques, avec une vis extrudeuse (4) ayant un cylindre de vis (3), avec un dispositif d'entraînement (13, 23) pour la vis extrudeuse (4) dans un boîtier (2) en plusieurs parties dans le prolongement axial de la vis extrudeuse (4), et avec un dispositif d'air chaud (27) pour produire de l'air de préchauffage, **caractérisé par** ce que le boîtier (2) présente côté vis un corps de refroidissement (6) doté d'admissions d'air (8), qui est conçu comme élément de base porteur central pour recevoir mécaniquement les parois de boîtier (2', 2"), le dispositif d'entraînement (13, 23), le cylindre de vis (3) et le dispositif d'air chaud (25, 26, 27).

2. Appareil portable de soudage par extrusion selon la revendication 1, **caractérisé en ce que** le corps de refroidissement (6) est réalisé au moins en deux parties, et les parties du corps de refroidissement (6) sont mutuellement assemblées avec serrage.

3. Appareil portable de soudage par extrusion selon la revendication 2, **caractérisé en ce que** la transmission (23) du dispositif d'entraînement est entourée au moins partiellement par le corps de refroidissement (6) et est au moins partiellement en contact thermique avec lui.

4. Appareil portable de soudage par extrusion selon l'une des revendications précédentes, **caractérisé en ce qu'**au moins un canal d'alimentation (31) pour la baguette d'apport est disposé dans le corps de refroidissement (6) et se termine dans la région d'alimentation (21) de la vis extrudeuse (4).

5. Appareil portable de soudage par extrusion selon la revendication 4, **caractérisé en ce que** l'ouverture d'alimentation (14) menant au canal d'alimentation (31) est disposée sur le corps de refroidissement (6).

6. Appareil portable de soudage par extrusion selon la revendication 4 ou 5, **caractérisé en ce que** le canal d'alimentation (31) débouche dans un manchon (32) d'alimentation de baguette d'apport entourant la vis extrudeuse (4) et pourvu d'au moins une rainure de guidage (33) s'étendant en oblique qui présente au moins un bossage pointu (34) s'étendant en direction longitudinale.

7. Appareil portable de soudage par extrusion selon l'une des revendications précédentes, **caractérisé en ce que** des éléments porteurs et de montage peuvent être installés sur le corps de refroidissement (6).
